# EUROPÄISCHE PATENTSCHRIFT

(11) **EP 2 015 890 B1**
(45) Veröffentlichungstag und Bekanntmachung des Hinweises auf die Patenterteilung: **20.03.2013**
(21) Anmeldenummer: 07728721.7
(22) Anmeldetag: 02.05.2007
(51) Int. Cl.: B23K 37/04, B23K 26/24, B23K 33/00

(54) **VERFAHREN ZUM FÜGEN EINES AUSSENBLECHES UND EINES INNENBLECHES, INSBESONDERE EINES ANBAUTEILS EINER KFZ.-KAROSSERIE**
METHOD OF JOINING AN OUTER SHEET AND AN INNER SHEET, IN PARTICULAR OF AN ATTACHMENT OF A MOTOR VEHICLE BODY
PROCÉDÉ POUR ASSEMBLER UNE TÔLE EXTÉRIEURE ET UNE TÔLE INTÉRIEURE, NOTAMMENT UNE PIÈCE À AJOUTER D'UNE CAROSSERIE DE VÉHICULE AUTOMOBILE.

(30) Priorität: 05.05.2006 DE 102006020920; 31.08.2006 DE 102006040902
(43) Veröffentlichungstag der Anmeldung: 21.01.2009
(73) Patentinhaber: ThyssenKrupp Drauz Nothelfer GmbH, 74076 Heilbronn (DE)
(72) Erfinder: CORNELIUS, Peter, 54317 Kosel (DE); LUFT, Axel, 54317 Gusterath (DE); WEILAND, Mirko, 66687 Lockweiler (DE)
(74) Vertreter: Cohausz & Florack
(86) Internationale Anmeldenummer: PCT/EP2007/054268
(87) Internationale Veröffentlichungsnummer: WO 2007/128759

(56) Entgegenhaltungen:
- EP-A2- 1 236 535
- DE-A1- 4 307 563
- DE-A1- 19 538 595
- DE-B3- 10 317 552

## Beschreibung

Die Erfindung betrifft ein Verfahren zum Fügen eines Außenbleches und eines Innenbleches gemäß dem Oberbegriff des Anspruchs 1 und eine Vorrichtung zum durchführen dieses Verfahren gemäß dem Oberbegriff des Anspruchs 8. DE 19538595 A1 offenbart ein solches Verfahren bzw. eine solche Vorrichtung

Bei einem bekannten Verfahren dieser Art (DE 103 17 552 B3) liegt der gefügte Teilabschnitt mit der Abkantung des Außenbleches an der Sichtseite des Anbauteils, bei einer Kraftfahrzeugtür an der der Scharnierseite der Tür gegenüber liegenden Seite und an der dem Schweller zugeordneten Seite, während im übrigen nicht von außen sichtbaren Bereich die Ränder von Außenblech und Innenblech miteinander überlappend gefügt werden. Bei diesem Verfahren wird Außen- und Innenblech nur im Bereich der einander überlappenden Ränder eingespannt. In der Praxis hat sich nun gezeigt, dass es bei dieser Art des Fügeverfahrens zu Problemen in dem Teilabschnitt des umlaufenden Randes kommt, wo die Abkantung vorgesehen ist. Beim Strahlschweißen oder Strahllöten verlagert sich der Randbereich des üblicherweise von elastischen Saugnäpfen gehaltenen Innenbleches aufgrund der dabei in die Bleche eingebrachten Wärme durch Verzug nach außen. Eine an der Sichtseite des Anbauteils einwandfreie Fügung von Innen- und Außenblech lässt sich so nicht prozesssicher erreichen.

Der Erfindung liegt die Aufgabe zugrunde, ein Verfahren zum Fügen eines Außenbleches und eines Innenbleches zu entwickeln, mit dem sich eine einwandfreie Fügenaht herstellen lässt.

Diese Aufgabe wird erfindungsgemäß bei einem Verfahren der eingangs genannten Art dadurch gelöst, dass das Innenblech an dem Teilabschnitt seines umlaufenden Randes, der gegen die Abkantung des Außenblechs gedrückt wird, ohne Einspannung über dem von Niederhaltern in einem Bett fixierten Außenblech gehalten und beim Fügen durch außenseitig positionierte Anschläge an einer Bewegung weg vom Außenblech gehindert wird, wobei die Anschläge entsprechend dem Fortschritt der Fügung nacheinander den Weg für den Schweiß- oder Lötkopf freigeben.

Bei dem erfindungsgemäßen Fügeverfahren wird auf eine Einspannung des Innenbleches in dem Teilabschnitt mit der Abkantung verzichtet. Gleichwohl lässt sich eine positionsgenaue, einwandfreie Fügenaht prozesssicher herstellen. Die Erfindung beruht auf der Erkenntnis, dass dafür einseitige Anschläge an der Außenseite des Innenbleches ausreichen, weil das Innenblech aufgrund der eingebrachten Strahlungswärme nur die Tendenz hat, sich vom Außenblech weg zu bewegen.

Um die Prozesssicherheit beim Fügen weiter zu verbessern, indem das Innenblech unmittelbar am Fügeort noch exakter positioniert wird, ist nach einer Ausgestaltung der Erfindung vorgesehen, das Innenblech beim Fügen durch in einer Reihe entlang der Fügefuge in ihrer Nähe angeordnete, an der Außenseite des Innenbleches angreifende lösbare Halter gehalten wird. Diese Halter verhindern auch eine Bewegung des Innenbleches in Richtung des Außenbleches, die aber im Vergleich zu der geschilderten Tendenz des Innenbleches, sich vom Außenblech weg zu bewegen, gering ist.

Die Fügung kann mit dem Schweiß- oder Lötkopf abschnittsweise zwischen den Anschlägen und Niederhaltern erfolgen. Erfindungsgemäß lässt sich aber eine durchgehende Fügenaht mit ortsnah am Fügeort positionierten Niederhaltern und Anschlägen problemlos mit in einer Reihe entlang der Fügefuge positionierten, einzeln anstellbaren Anschlägen und/oder Niederhaltern realisieren, da die im Wege des Schweiß- oder Lötkopfes liegenden Anschläge und/oder Niederhalter entsprechend dem Fortschritt der Fügung nacheinander den Weg für den Schweiß- oder Lötkopf freigeben. In entsprechender Weise sollten auch die Halter den Weg für den Schweiß- und Lötkopf freigeben.

Wie aus dem gattungsbildenden Stand der Technik an sich bekannt, kann der Rand des Innenbleches verschieden gestaltet sein. Vorzugsweise ist er ähnlich dem Außenblech nach innen abgekantet. Da in aller Regel mit einem Schweiß- bzw. Zusatzwerkstoff gearbeitet wird, lässt sich dieser besonders gut in die Fügefuge einbringen, wenn auch das Innenblech im Bereich des Abschnittes der Fügung nach innen abgekantet ist. Das Innenblech wird üblicherweise an nachgiebigen Saugern gehalten. Es kann aber auch nur oder auch zusätzlich auf Distanzelementen abgestützt sein, die zwischen dem Innen- und Außenblech vorgesehen sind. Als Distanzelemente eignen sich Sicken im Innenblech oder Einsatzkörper zwischen Innenblech und Außenblech. Solche Distanzelemente erübrigen sich insbesondere dann, wenn die beschriebenen Halter eingesetzt werden.

Das in einem Bett fixierte Außenblech lässt sich auf verschiedene Art und Weise mit den Niederhaltern fixieren. Besonders vorteilhaft ist es aber, wenn die Niederhalter auf die Kante der Abkantung drücken, weil das Außenblech dann am Fügeort besonders positionsgenau ausgerichtet ist.

Eine Vorrichtung zur Durchführung des beschriebenen Verfahrens mit einem Fixiermittel für das Außenblech und Haltemitteln für das mit Abstand darüber und mit seinem Rand innenseitig in Anlage an dem abgekanteten Rand des Außenbleches zu haltende Innenblech, wobei auf der dem Außenblech abgewandten Seite des Innenbleches entlang der Fügefuge, die vom abgekanteten Rand des Innenbleches gebildet wird, auf den Rand des Außenbleches drückende Niederhalter und für den Rand des Innenbleches Anschläge vorgesehen sind, wobei jeweils ein Niederhalter und ein Anschlag von einem gemeinsamen Bock getragen sind, und mit einem entlang der Fügefuge verfahrbaren Schweiß- und Lötkopf ist dadurch gekennzeichnet, dass der Bock entsprechend dem Fortschritt der Fügung aus seiner Betriebsstellung am Anbauteil in eine den Verfahrweg für den Schweiß- oder Lötkopf freigebende Parkstellung verstellbar ist, und dass das Innenblech an dem Teilabschnitt seines umlaufenden Randes, der gegen die Abkantung des Außenbleches gedrückt wird, ohne Einspannung gehalten wird.

Vorzugsweise sind die Anschläge von verschwenkbaren Böcken getragen.

Jeder außenseitig am Innenblech angreifende Halter mechanischer, pneumatischer oder elektromagnetischer Art ist bezüglich seiner Haltefunktion aktivierbar, so dass er sich entsprechend dem Fortschritt der Fügung aus seiner Betriebsstellung am Innenblech problemlos in eine den Verfahrweg für den Schweiß- und Lötkopf freigebende Parkstellung verstellen lässt. Insbesondere kann jeder Halter vom verschwenkbaren gemeinsamen Bock für einen der Anschläge und einen der Niederhalter getragen sein.

Da es beim Strahlschweißen und/oder Strahllöten, insbesondere mit Laserstrahl, wichtig ist, dass der Strahl exakt auf die Fügefuge gerichtet ist, kann der Schweiß- bzw. Lötkopf gesteuert werden. Wenn Schweißzusatzmaterial, z.B. Löt- oder Schweißdraht verwendet wird, kann dieser als Abtastorgan für die Position der Fügefuge verwendet werden. In Abhängigkeit von diesem Prüfergebnis wird dann der Schweiß- bzw. Lötkopf verstellt. So dient der Draht gleichzeitig als "Nahtfindungssensor".

Im Folgenden wird die Erfindung anhand einer ein Ausführungsbeispiel darstellenden Zeichnung näher erläutert. Im Einzelnen zeigen:

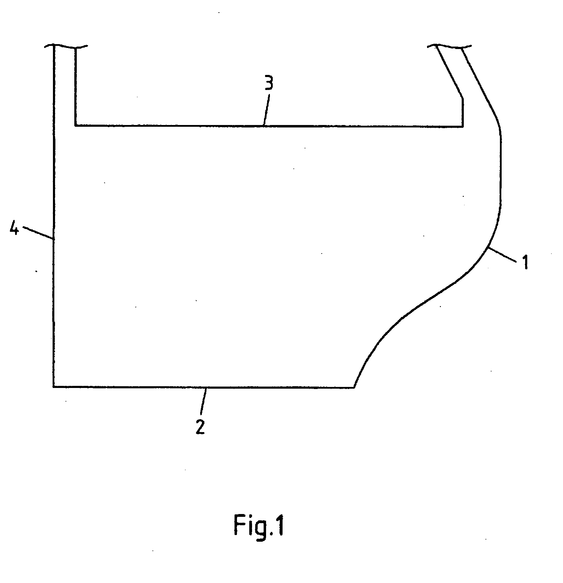

- Fig. 1: ein Anbauteil als Tür eines Kraftfahrzeuges im Ausschnitt und Ansicht,
- Fig. 2: eine Vorrichtung zum Fügen eines Außenbleches und eines Innenbleches des Anbauteils einer Kfz.-Karosserie nach Fig. 1 in schematischer Darstellung und im Vertikalschnitt in Betriebsstellung und gestrichelt in Parkstellung,

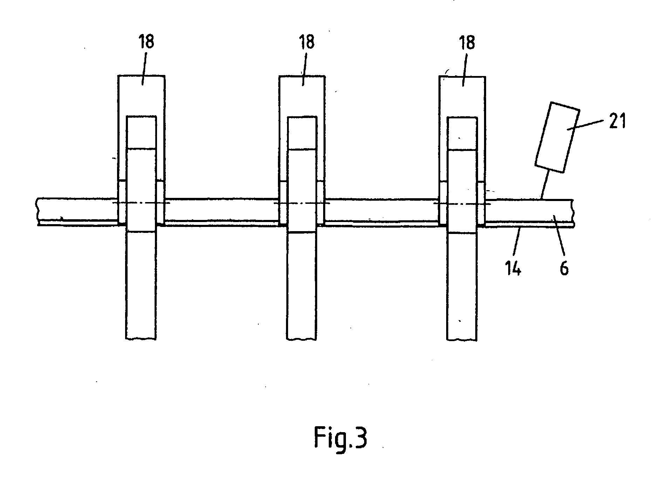

- Fig. 3: die Vorrichtung gemäß Fig. 2 in Ansicht aus Richtung des Pfeils P der Fig. 2,
- Fig. 4: die Vorrichtung gemäß Fig. 2 in einem vergrößerten Ausschnitt mit einem verschwenkbaren Bock mit Anschlag und Niederhalter und
- Fig. 4a - 4c: ein Innen- und ein Außenblech des Anbauteils nach Fig. 1 mit und ohne Distanzelemente im Zwischenraum im Ausschnitt und im Querschnitt.

Bei einem Anbauteil eines Kraftfahrzeuges, insbesondere einer Hintertür, wird das erfindungsgemäße Verfahren an den Sichtseiten der Tür angewendet, das sind die hintere Seite 1, die Schlossseite, und die untere Seite 2 am Schweller, während die Seite 3 am Fenster und die Seite 4 an den Scharnieren nach herkömmlichen Verfahren, insbesondere im Überlappstoß, gefügt sein können, wie es auch aus der gattungsbildenden Druckschrift (DE 103 17 552 B3) bekannt ist.

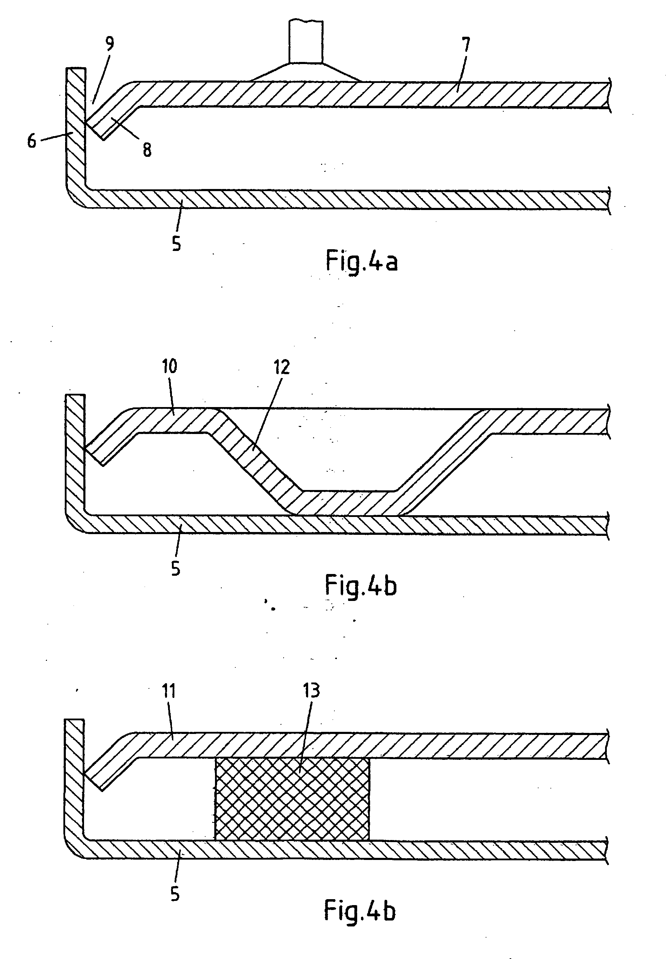

Um ein Außenblech 5 für die Fügung vorzubereiten, weist es an seinen Sichtseiten 1, 2 eine Abkantung 6 auf, wie in Fig. 4a dargestellt ist. Das Innenblech 7 erhält vorzugsweise auch eine Abkantung 8, die allerdings weniger stark abgewinkelt ist als die Abkantung 6. Das Innenblech 7 wird innenseitig gegen die Abkantung 6 geschoben, so dass ein Fügespalt 9 entsteht. Die Ausführungsbeispiele 4b, 4c unterscheiden sich von denen der Fig. 4a nur dadurch, dass zwischen dem Außenblech 5 und dem Innenblech 10 bzw. 11 ein Distanzelement vorgesehen ist, in Form einer Sicke 12 oder eines Körpers 13, der vorzugsweise z.B. durch Wärmeeinwirkung aufschäumbar ist.

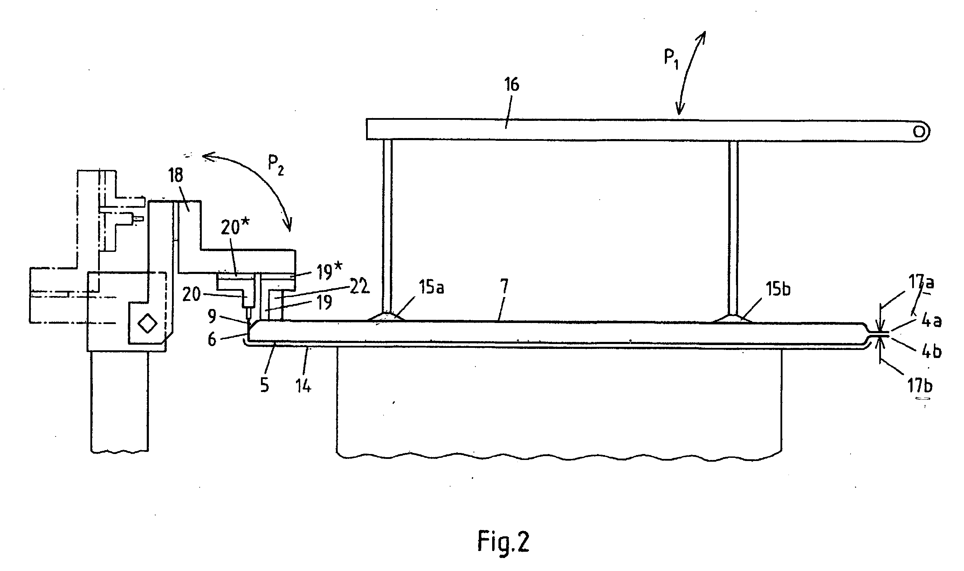

Um die Fügung durchführen zu können, wird gemäß Fig. 2 das vorbereitete Außenblech 5 in einem Bett 14 positioniert und hier mit nicht dargestellten Mitteln ausgerichtet und gehalten. Das Innenblech 7 wird außenseitig von Saugern 15a, 15b eines in Richtung des Pfeils P₁ verschwenkbaren Schwenkarms 16 in Position über dem Außenblech 5 und in Anlage an der Abkantung 6 gehalten. An der nicht sichtbaren Seite 4 werden einander überlappende Randbereiche 4a, 4b durch Spannmittel 17a, 17b aufeinander gedrückt, um sie miteinander durch Schweißen verbinden zu können.

An der sichtbaren Seite 1 dagegen wirken besondere Mittel auf die Abkantung 6 des Außenbleches 5 und auf das Innenblech 7 ein. Diese besonderen Mittel bestehen aus einer Vielzahl von gleichartigen Baueinheiten, die in Reihe längs des Fügespaltes 9 positioniert sind. Jede Baueinheit trägt mit einem in Richtung des Pfeils P₂ verschwenkbaren Bock 18 einen Anschlag 19 und einen Niederhalter 20. Der Anschlag 19 ist so positioniert, dass das Innenblech 7 drucklos in Anlage am Anschlag 19 gehalten wird. Der Anschlag 19 ist durch Einlegebleche 19* in der Höhe einstellbar. Der Niederhalter 20, der ebenfalls durch Einlegebleche 20* in der Höhe einstellbar ist, ist federnd abgestützt und drückt auf die freie Stirnseite der Abkantung 6.

Um den nicht unmittelbar abgestützten Rand des Innenbleches präziser zu halten, trägt der verschwenkbare Bock 18 neben dem Anschlag 19 ein aktivierbares Halteelement 22. Das Halteelement 22 kann rein mechanischer, pneumatischer oder elektromagnetischer Art sein. Es hält das Innenblech 7 in Anlage am Anschlag 19 und damit in einer präzisen Position unmittelbar am Fügeort.

Um die Fügung mittels Strahlschweißen oder Strahllöten insbesondere mittels Laser durchführen zu können, ist ein Schweiß- oder Lötkopf 21 vorgesehen, der längs der Fügenaht 9 verfahren werden kann. Der Schweißkopf 21 weist einen Löt-/Schweißdraht auf, der die Fügefuge 9 abtastet und in Abhängigkeit von dem erfassten Fügeort ein Signal zur Einstellung an nicht dargestellte Stellmittel des Schweiß- oder Lötkopfes 21 gibt, so dass der Schweiß- oder Lötkopf 21 immer optimal zur Fügefuge 9 ausgerichtet ist. Damit der Schweiß- oder Lötkopf 21 längs der Fügefuge 9 verfahren werden kann, müssen die einzelnen Baueinheiten mit dem Anschlag 19 und dem Niederhalter 20 den Weg freigeben. Dies geschieht entsprechend dem Fügefortschritt durch Verschwenken der Baueinheiten 18, 19, 20 aus deren in Fig. 2 ausgezeichneten Betriebsstellung in die gestrichelte Parkposition. Da der Niederhalter 20 das Außenblech 5 fixiert im Bett 14 hält und der Anschlag 19 in Kombination mit dem in seiner Haltefunktion aktivierbaren Halter 22 das Innenblech 7 relativ dazu festhält bzw. ein Auswandern des Innenbleches 7 verhindert, kann es durch die beim Fügen eingebrachte Strahlungsenergie nicht zu einer relativen Verlagerung des Innenbleches 7 gegenüber der Abkantung 6 und in der Folge zu einer unsauberen Fügenaht kommen.

## Patentansprüche

1. Verfahren zum Fügen eines Außenbleches (5) und eines Innenbleches (7) eines Anbauteils, insbesondere eines Anbauteils einer Kfz.-Karosserie, bei dem das Außenblech (5) mindestens auf einem Teilabschnitt seines umlaufenden Randes eine in Richtung des Innenbleches (7) gerichtete Abkantung (6) aufweist, mit der das mit seinem Rand unter Bildung einer Fügefuge (9) innenseitig dagegen gedrückte Innenblech (7) durch Strahlschweißen oder Strahllöten mittels eines Schweiß- oder Lötkopfes (21) gefügt wird, **dadurch gekennzeichnet, dass** das Innenblech (7) an dem Teilabschnitt seines umlaufenden Randes, der gegen die Abkantung (6) des Außenblechs (5) gedrückt wird, ohne Einspannung über dem von Niederhaltern (20) in einem Bett fixierten Außenblech (5) gehalten und beim Fügen durch außenseitig positionierte Anschläge (19) an einer Bewegung weg vom Außenblech (5) gehindert wird, wobei die Anschläge (19) entsprechend dem Fortschritt der Fügung nacheinander den Weg für den Schweiß- oder Lötkopf (21) freigeben.

2. Verfahren nach Anspruch 1, **dadurch gekennzeichnet, dass** das Innenblech (7) beim Fügen durch in einer Reihe entlang der Fügefuge (9) und in ihrer Nähe angeordnete, an der Außenseite des Innenbleches (7) angreifende, lösbare Halter (22) gehalten wird.

3. Verfahren nach Anspruch 1 oder 2, **dadurch gekennzeichnet, dass** die Halter (22) entsprechend dem Fortschritt der Fügung nacheinander den Weg für den Schweiß- oder Lötkopf (21) freigeben.

4. Verfahren nach einem der Anspruch 1 bis 3, **dadurch gekennzeichnet, dass** auch das Innenblech (7) im Bereich des Abschnittes der Fügung in Richtung des Außenbleches (5) abgekantet ist.

5. Verfahren nach einem der Ansprüche 1 bis 4, **dadurch gekennzeichnet, dass** das Innenblech (7) auf dem Außenblech (5) durch ein zwischen dem Außenblech (5) und dem Innenblech (7) im Bereich der Fügung (9) angeordnetes Distanzelement (12, 13) abgestützt wird.

6. Verfahren nach Anspruch 5, **dadurch gekennzeichnet, dass** das Distanzelement (12, 13) eine Sicke (12) im Innenblech (7) oder ein Einsatzkörper (13) ist.

7. Verfahren nach einem der Ansprüche 1 bis 6, **dadurch gekennzeichnet, dass** mit den Niederhaltern (20) auf die Kante der Abkantung des Außenbleches (5) gedrückt wird.

8. Vorrichtung zur Durchführung des Verfahrens nach Anspruch 1, mit einem Fixiermittel (14) für das Außenblech (5) und Haltemitteln (15a, 15b) für das mit Abstand darüber und mit seinem Rand (8) innenseitig in Anlage an dem abgekanteten Rand (6) des Außenbleches (5) zu haltende Innenblech (7), wobei auf der dem Außenblech (5) abgewandten Seite des Innenbleches (7) entlang der Fügefuge (9), die vom abgekanteten Rand (6) des Außenbleches (5) und dem daran anstoßenden Rand (8) des Innenbleches (7) gebildet wird, auf den Rand (6) des Außenbleches (5) drückende Niederhalter (20) und für den Rand (8) des Innenbleches (7) Anschläge (19) vorgesehen sind, wobei jeweils ein Niederhalter (20) und ein Anschlag (19) getragen sind, und mit einem entlang der Fügefuge (9) verfahrbaren Schweiß- oder Lötkopf (21), **dadurch gekennzeichnet, dass** der Niederhalter (20) und der Anschlag (19) von einem gemeinsamen Bock (18) getragen sind, dass der Bock (18) entsprechend dem Fortschritt der Fügung aus seiner Betriebsstellung am Anbauteil in eine den Verfahrweg für den Schweiß- oder Lötkopf (21) freigebende Parkstellung verstellbar ist, und dass das Innenblech (7) an dem Teilabschnitt seines umlaufenden Randes, der gegen die Abkantung (6) des Außenbleches (5) gedrückt wird, ohne Einspannung gehalten wird.

9. Vorrichtung nach Anspruch 8, **dadurch gekennzeichnet, dass** zumindest die Anschläge (19) von verschwenkbaren Böcken (18) getragen sind.

10. Vorrichtung nach Anspruch 8 oder 9, **dadurch gekennzeichnet, dass** jeder außenseitig am Innenblech (7) angreifende Halter (22) mechanischer, pneumatischer oder elektromagnetischer Art bezüglich seiner Haltefunktion aktivierbar ist.

11. Vorrichtung nach Anspruch 10, **dadurch gekennzeichnet, dass** der Halter (22) entsprechend dem Fortschritt der Fügung aus seiner Betriebsstellung am Innenblech in eine den Verfahrweg für den Schweiß- oder Lötkopf (21) freigebende Parkstellung verstellbar ist.

12. Vorrichtung nach Anspruch 11 , **dadurch gekennzeichnet, dass** jeder Halter (22) vom verschwenkbaren, gemeinsamen Bock (18) für einen der Anschläge (18) und einen der Niederhalter (20) getragen ist.

## Claims

1. Method of joining an outer sheet (5) and an inner sheet (7) of an attachment part, in particular of an attachment part of a motor vehicle body, wherein the outer sheet (5) comprises, at least on a partial section of its circumferential edge, a fold (6) which is directed towards the inner sheet (7) and to which the inner sheet, which is pressed with an inner sheet edge against the outer sheet on the inner side of the outer sheet thus forming a joining groove (9), the fold and the inner sheet (7) being joined by beam welding or beam brazing by means of a welding or brazing head (21), **characterized in that** the inner sheet (7) is held without clamping on the partial section of its edge which is pressed against the fold (6) of the outer sheet (5) to the outer sheet (5) which is fixed in a bed by hold-down devices (20), and is prevented from moving away from the outer sheet (5) during the joining process by stops (19) positioned on the outer side of the inner sheet, wherein the stops (19) clear the path for the welding or brazing head (21) consecutively according to the progress of the joining procedure.

2. Method according to claim 1, **characterized in that** during the joining process the inner sheet (7) is held by releasable holders (22) which are disposed in a row along the joining groove (9) and in proximity thereto and acting on the outer side of the inner sheet (7).

3. Method according to claim 1 or claim 2, **characterized in that** the releasable holders (22) clear the path for the welding or brazing head (21) consecutively according to the progress of the joining procedure.

4. Method according to any of claims 1 to 3, **characterized in that** in a region of the joining section, also the inner sheet (7) is folded in a direction of the outer sheet (5).

5. Method according to any of claims 1 to 4, **characterized in that** the inner sheet (7) is supported on the outer sheet (5) by a spacer element (12, 13) which is disposed between the outer sheet (5) and the inner sheet (7) in a region of the joining (9).

6. Method according to claim 5, **characterized in that** the spacer element (12, 13) is a bead (12) in the inner sheet (7) or an insert body (13).

7. Method according to any of claims 1 to 6, **characterized in that** pressure is applied by the hold-down devices (20) onto the edge of the fold of the outer sheet (5).

8. Device for carrying out the method according to claim 1, comprising a locating means (14) for the outer sheet (5) and holding means (15a, 15b) for the inner sheet (7), the inner sheet being held at a spaced interval above the outer sheet (5) and with its edge (8) on an inner side in abutment against the folded edge (6) of the outer sheet (5), wherein hold-down devices (20) which press onto the folded edge (6) of the outer sheet (5) are provided on a side of the inner sheet (7) opposite to the outer sheet (5) along the joining groove (9) which is formed by the folded edge (6) of the outer sheet (5) and the edge (8) of the inner sheet (7) abutting against the folded edge, and stops (19) are provided for the edge (8) of the inner sheet (7), wherein at least one hold-down device (20) and at least one stop (19) are each supported, and a welding or brazing head (21) is provided which can be displaced along the joining groove (9), **characterized in that** the hold-down device (20) and the stop (19) are supported by a common block (18) which according to the progress of the joining procedure can be adjusted from its operative position on the attachment part into a parked position which clears the movement path for the welding or brazing head (21), and **in that** the inner sheet (7) is held without clamping on a partial section of its edge which is pressed against the fold (6) of the outer sheet (5).

9. Device according to claim 8, **characterized in that** at least the stops (19) are supported by pivotable blocks (18) .

10. Device according to claim 8 or claim 9, **characterized in that** each mechanical, pneumatic, or electromagnetic holder (22) which acts externally on the inner sheet (7) can be activated in relation to its holding function.

11. Device according to claim 10, **characterized in that** according to the progress of a joining procedure, the mechanical, pneumatic, or electromagnetic holder (22) can be adjusted from its operative position on the inner sheet into a parked position which clears the movement path for the welding or brazing head (21).

12. Device according to claim 11, **characterized in that** each mechanical, pneumatic, or electromagnetic holder (22) is supported by a pivotable, common block (18) for one of the stops (19) and one of the hold-down devices (20).

## Revendications

1. Procédé pour l'assemblage d'une tôle externe (5) et d'une tôle interne (7) d'une pièce de montage, en particulier d'une pièce de montage d'une carrosserie automobile, où la tôle externe (5) comprend au moins sur une section partielle de son bord périphérique, un rebord (6) orienté en direction de la tôle interne (7), rebord avec lequel la tôle interne (7) pressée par son bord en formant un joint d'assemblage (9) à l'intérieur est assemblé par soudage ou brasage à jet au moyen d'une tête de soudage ou de brasage (21), **caractérisé en ce que** la tôle interne (7) est maintenue par la section partielle de son bord périphérique, qui est pressé contre le rebord (6) de la tôle externe (5), sans serrage au-dessus de la tôle externe (5) fixée dans un lit par des serre-flancs (20), et qui est bloquée pour ne pas s'éloigner de la tôle externe (5) lors de l'assemblage par des butées (19) positionnées sur la face externe, les butées (19) dégageant progressivement le parcours de la tête de soudage ou de brasage (21) en fonction de la progression de l'assemblage.

2. Procédé selon la revendication 1, **caractérisé en ce que** la tôle interne (7) est maintenue par des supports amovibles (22) disposés en enfilade le long du joint d'assemblage (9) à sa proximité et appréhendant la face externe de la tôle interne (7).

3. Procédé selon la revendication 1 ou 2, **caractérisé en ce que** les supports (22) dégagent le trajet les uns après les autres en fonction de la progression de l'assemblage pour la tête de soudage ou de brasage (21).

4. Procédé selon l'une des revendications 1 à 3, **caractérisé en ce que** la tôle interne (7) est également chanfreinée en direction de la tôle externe (5) dans la zone de la section de l'assemblage.

5. Procédé selon l'une des revendications 1 à 4, **caractérisé en ce que** la tôle interne (7) prend appui sur la tôle externe (5) par un élément écarteur (12, 13) disposé entre la tôle externe (5) et la tôle interne (7) dans la zone de du joint d'assemblage (9).

6. Procédé selon la revendication 5, **caractérisé en ce que** l'élément écarteur (12, 13) est une moulure (12) dans la tôle interne (7) ou un corps d'insert (13).

7. Procédé selon l'une des revendications 1 à 6, **caractérisé en ce que** les serre-flancs (20) appliquent une pression contre le bord du rebord de la tôle externe (5).

8. Dispositif pour la mise en oeuvre du procédé selon la revendication 1, avec un moyen de fixation (14) pour la tôle externe (5) et des moyens de retenue (15a, 15b) pour la tôle interne (7) à maintenir à distance au-dessus et par son bord (8) sur la face interne contre le rebord (6) de la tôle externe (5), sur la face détournée de la tôle externe (5), de la tôle interne (7), le long du joint d'assemblage (9) qui est formé par le rebord (6) de la tôle externe (5) et le bord jointif (8) de la tôle interne (7), il est prévu des serre-flancs (20) pressant sur le bord (6) de la tôle externe (5) et des butées (19) pour le bord (8) de la tôle interne (7), un serre-flanc (20) et une butée (19) étant supportés, et avec une tête de brasage ou de soudage (21) mobile le long du joint d'assemblage (9), **caractérisé en ce que** le serre-flanc (20) et la butée (19) sont portés par un chevalet commun (18), **en ce que** le chevalet (18) selon la progression de l'assemblage peut être déplacé depuis sa position de service sur la pièce à montage dans une position de stationnement dégageant le trajet pour la tête de soudage ou de brasage (21) et **en ce que** la tôle interne (7) est maintenue sans serrage sur la section partielle de son bord périphérique qui est pressé contre le rebord (6) de la tôle externe (5).

9. Dispositif selon la revendication 8, **caractérisé en ce qu'**au moins les butées (19) sont portées par des chevalets (18) pivotants.

10. Dispositif selon la revendication 8 ou 9, **caractérisé en ce que** chaque support (22) du type mécanique, pneumatique ou électromagnétique appréhendant la tôle interne (7) par la face extérieure peut être activé concernant sa fonction de support.

11. Dispositif selon la revendication 10, **caractérisé en ce que** le support (22) est réglable dans une position de stationnement dégageant le trajet de la tête de brasage et de soudage (21) depuis sa position de service en fonction de la progression de l'assemblage.

12. Dispositif selon la revendication 11, **caractérisé en ce que** chaque support (22) est porté par le chevalet (18) pivotant commun pour l'une des butées (19) ou l'un des serre-flancs (20).
